**Europäisches Patentamt**

**European Patent Office**

**Office européen des brevets**

(19)

(11) Publication number: **0 067 797**

**B1**

(12) **EUROPEAN PATENT SPECIFICATION**

(45) Date of publication of patent specification: **28.09.88**

(21) Application number: **82830160.6**

(22) Date of filing: **07.06.82**

(51) Int. Cl.⁴: **H 01 S 3/097**

(54) Longitudinal discharge pulse laser with pre-ionization obtained by means of corona effect.

(30) Priority: **17.06.81 IT 4870581**

(43) Date of publication of application:
**22.12.82 Bulletin 82/51**

(45) Publication of the grant of the patent:
**28.09.88 Bulletin 88/39**

(84) Designated Contracting States:
**DE FR GB NL SE**

(56) References cited:
**FR-A-2 227 660**
**US-A-3 460 053**

**JOURNAL OF PHYSICS D-APPLIED PHYSICS,
vol. 13, no. 10, October 1980, pages 1835-1840,
The Institute of Physics, Dorking, GB; M.
PETROVA et al.: "Effect of organic additives on
the upper laser level relaxation rate and the
gain of a TE CO2 laser"**

(73) Proprietor: **SELENIA INDUSTRIE
ELETTRONICHE ASSOCIATE S.p.A.
Via Tiburtina, KM 12.400
I-00131 Roma (IT)**

(72) Inventor: **Penco, Eugenio
Via Bevignani 12
I-00162 Roma (IT)**
Inventor: **Marchetti, Renato
Via Oderisi da Gubbio 149
I-00146 Roma (IT)**

(74) Representative: **Gustorf, Gerhard, Dipl.-Ing.
Patentanwalt Dipl.-Ing. Gerhard Gustorf
Mühlenstrasse 1
D-8300 Landshut (DE)**

## Description

This invention relates to a longitudinal discharge pulse laser according to the pre-characterising part of claim 1. Such a laser is known from US—A—3 460 053.

It is further known to realize a pulse discharge laser by the following methods:

a) utilize a c.w. laser which gives at the output a power of 50—70 W/metre and apply to this a rotating mirror or electro-optic Q switch.

Under these conditions the peak power obtainable is from 50 to 100 times more than for the CW laser, for which 2.5—3.5 W/metre can be obtained;

b) utilize a CW laser and modify the electrical power supply system of it in such a way that by pulsing the power supply there circulates a current of an order of magnitude greater than that circulating in the CW laser.

Under these conditions the peak power obtained is from 1—7 KW/m and the mean power is around 2.5—3.5 W/m.

c) Pulse a CW laser with very high voltage: 280 KV/metre (Hill) or 90 KV/metre (Dezemberg); in this way Hill obtained a peak power of 17 KW/metre and a mean power of 28 W/metre (at 40 p.p.s.).

Dezemberg obtained 6.4 KW/metre and a mean power comparable to that obtained by Hill.

The efficiencies achieved are 4—10% according to the first author quoted and 3,6% for Dezemberg.

It constitutes the aim of this invention to realise a pulse laser of the type described in c) in which the working voltage of the laser is drastically reduced.

This aim is achieved in this invention by means of pre-ionization of the gas via the corona effect. The discharge which creates this pre-ionization is achieved by feeding a high tension pulse (typically more than 50 KV) to a series of metal rings placed on glass tubes which form the envelope of the laser.

Thus the subject of this invention consists in a longitudinal discharge pulse laser comprising three electrodes, one of which is common to two pump discharges between said common electrode and two further electrodes, said further electrodes being fed by negative pulses and said further electrodes and said common electrode being joined together by glass tubes forming the laser envelope, within which glass tubes said two pump discharges are produced by the triggering of a thyratron, characterised by means for feeding a high voltage pulse to metal rings, which are coaxially placed on said glass tubes in order to preionize by corona effect a gas contained in said glass tubes, and by means which establish a given time delay between the beginning of said pre-ionization and the triggering of said pump discharges by said thyratron.

Particular embodiments of the invention are characterised in the depending claims.

A way of carrying out the invention will now be described in greater detail with reference to the following figures, in which:

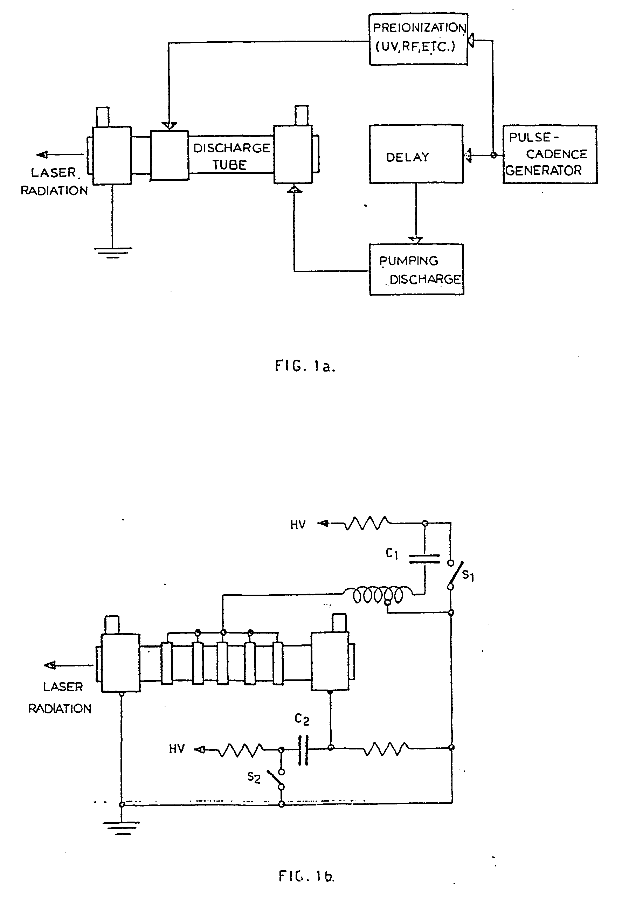

Figure 1a) shows a block diagram of a device in which the pre-ionization is obtained by means of radio frequency ultraviolet radiation, etc.

Figure 1b) shows a laser in which the pre-ionization is obtained by means of the corona effect.

Figure 2 shows the electrical circuit of an embodiment of the invention.

Figure 3 shows schematically a circuit for the recirculation of the gas.

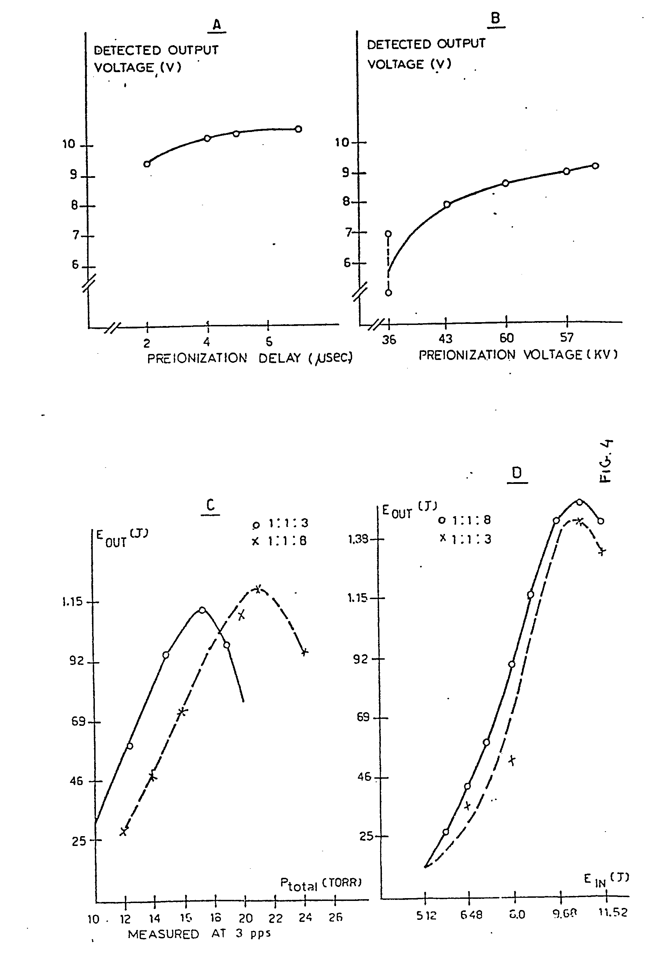

Figure 4A shows the dependence of the output energy on the delay and

Figure 4B shows the dependence of the energy on the pre-ionization pulse voltage.

Figures 4C and 4D show the influence of the pump pressure and energy on the laser output.

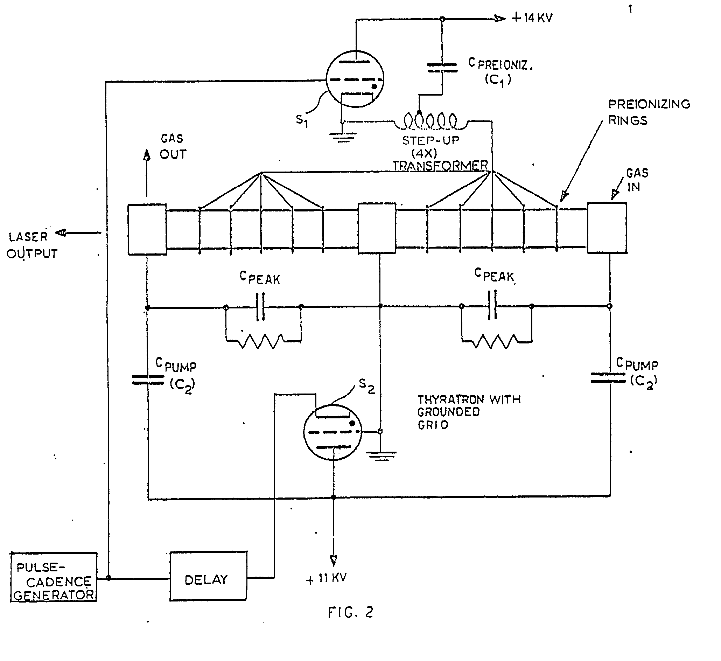

Referring now to Figure 2 we see how a laser realised in accordance with the invention is formed by two sections so as to work with reduced voltages.

The employment of pre-ionization permits a further drastic lowering of the laser working voltage. By resorting to this technique we succeed with working at voltages below 30 KV/metre in obtaining a peak power of 33 KW/metre and a mean power of 50 W/metre (100 p.p.s.).

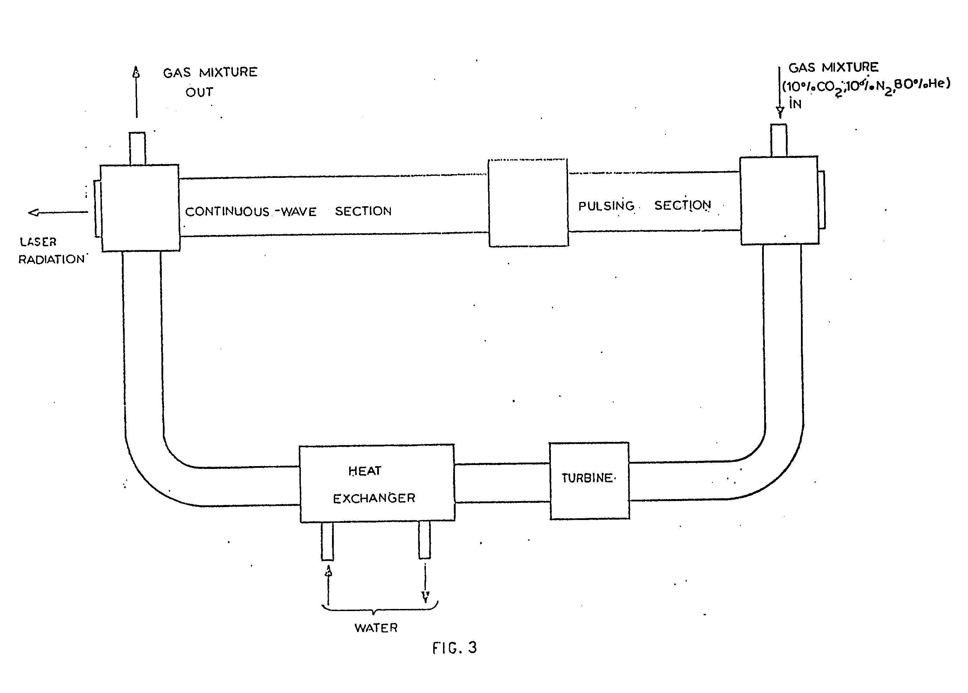

A continuous emission section operating at the same pressure and a recirculation of the gas as shown in Figure 3 can also be applied to the laser according to the invention.

Electrically we have the following sequence: a pulse is applied to the preionization metal rings and, after a delay (7 μsec), the pump discharge is fed to the electrodes by means of a thyratron.

A variation of the circuit in Figure 2 can be obtained by omitting the pump discharge thyratron S2, maintaining the voltage of $C_2$ below the voltage of self-trigger and by starting the pre-ionization discharge. Thus the gas is ionized and the condenser $C_2$ discharges (this process is analogous to what occurs in flash lamps).

In the following some of the characteristics of the functioning of the laser according to the invention are given.

The laser according to the invention exhibits the advantages:

a) Electrical and mechanical

Electrical pulse for the pump with width of 10—50 microseconds, with peak current of the order of 100—200 A; so that normal electrical components may be used;

low cost electrodes, because not tested to a special specification (as in the TEA).

b) Optical components

Laser pulse of long duration (10—100 μsec) so that the peak powers in use do not damage the optics;

high uniformity of the beam, with total absence of hot-spots (this fact is due to the longitudinal discharge).

c) Performance, etc.

High repetition rates obtainable;

possibility of recirculating the gas to reduce the consumption of it and increase the repetition rates;

low consumption of gas since it works at low pressure (10—50 Torr, (1 Torr=133 Pa));

modularity: many modules may be mass produced;

high volume active-low volumetric density of pumping;

high efficiency (compared with the CW lasers modified to obtain pulse emission);

possibility of adding sections working in CW;

the proposed laser has supplied 50 W/metre at a repetition rate of 100 p.p.s..

A preferred embodiment of the invention has the following parameters:

| | |
|---|---|
| Total length of the discharge | 80 cm |
| Total volume | 0,95 dm³ |
| Maximum pump energy | 9.7 joules |
| Maximum output energy | |
| (at 100 p.p.s.) | 1.2 joules |
| Maximum efficiency | 12% |
| Mean output power at 100 p.p.s. | 40 Watt |
| Laser pulse duration | 45 µsec |
| Corona-effect pre-ionization | |
| energy | 1.6 joules |
| Voltage (in absence of discharge) | 60 KV |

Miscellaneous: $CO_2$ 10%; $N_2$ 10%; He 80%.

### Claims

1. Longitudinal discharge pulse laser comprising three electrodes, one of which is common to two pump discharges between said common electrode and two further electrodes, said further electrodes being fed by negative pulses and said further electrodes and said common electrode being joined together by glass tubes forming the laser envelope, within which glass tubes said two pump discharges are produced by the triggering of a thyratron, characterised by means for feeding a high voltage pulse to metal rings, which are coaxially placed on said glass tubes in order to preionize by corona effect a gas contained in said glass tubes, and by means which establish a given time delay between the beginning of said pre-ionization and the triggering of said pump discharges by said thyratron.

2. Longitudinal discharge laser as in claim 1 in which said pump discharges are obtained by discharging a respective pump capacitor by means of said thyratron.

3. Longitudinal discharge laser as in claim 1 in which said time delay is 7 µsec.

4. Longitudinal discharge laser as in claim 1 and 2 in which said thyratron is omitted from the pump discharge control circuit and the pump capacitor voltage is maintained below the self-triggering voltage so that the pump discharge is obtained as soon as the gas is ionized by the pre-ionization discharge.

### Patentansprüche

1. Longitudinal gepulster Entladungslaser mit drei Elektroden, von denen eine erste gemeinsam vorgesehen ist für zwei Pumpentladungen zwischen der gemeinsamen Elektrode und zwei weiteren Elektroden, wobei die weiteren Elektroden durch negative Pulse versorgt werden, und die weiteren Elektroden sowie die gemeinsame Elektrode miteinander durch Glasröhren, die die Laserumhüllung bilden, verbunden sind, wobei innerhalb dieser Glasröhren die beiden Pumpentladungen durch Triggern eines Thyratrons erzeugt werden, gekennzeichnet durch eine Einrichtung zum Zuführen eines Hochspannungspulses zu Metallringen, die koaxial auf den Glasröhren angeordnet sind, um mittels eines Coronaeffektes ein in den Glasröhren enthaltenes Gas vorzuionisieren, und durch eine Einrichtung, die eine vorgegebene Zeitverzögerung zwischen dem Beginn der Vorionisierung und dem Triggern der Pumpentladungen des Thyratrons erzeugt.

2. Longitudinal gepulster Entladungslaser nach Anspruch 1, bei dem die Pumpentladungen durch Entladen eines jeweiligen Pumpkondensators mittels des Thyratrons erhalten werden.

3. Longitudinal gepulster Entladungslaser nach Anspruch 1, bei dem die Zeitverzögerung 7 µs beträgt.

4. Longitudinal gepulster Entladungslaser nach Anspruch 1 und 2, bei dem das Thyratron aus der Pumpentladungssteuerschaltung fortgelassen ist und die Pumpkondensatorspannung unterhalb der Selbst-Triggerspannung gehalten wird, so daß die Pumpentladung erhalten wird, sobald das Gas durch die Vorionisierungs-Entladung ionisiert wird.

### Revendications

1. Laser à impulsions à décharge longitudinale comprenant trois électrodes dont une est commune aux deux décharges de pompage entre ladite électrode commune et les deux autres électrodes, lesdites autres électrodes étant alimentées par des impulsions négatives et lesdites autres électrodes et ladite électrode commune étant reliées entre elles par des tubes de verre formant l'enveloppe du laser, lesdites deux décharges de pompage étant produites à l'intérieur de ces tubes de verre par le déclenchement d'un thyratron, caractérisé par des moyens destinés à fournir une impulsion de haute tension à des bagues métalliques qui sont disposées coaxialement sur lesdits tubes de verre en vue de pré-ioniser, par effet corona, un gaz contenu dans lesdits tubes de verre et par des moyens qui déterminent un délai donné entre le commencement de ladite pré-ionisation et le déclenchement desdites décharges de pompage par ledit thyratron.

2. Laser à décharge longitudinale selon la revendication 1, dans lequel lesdites décharges de pompage sont obtenues en faisant respectivement décharger un condensateur de pompage, au moyen dudit thyratron.

3. Laser à décharge longitudinale selon la revendication 1, dans lequel ledit délai est de 7 μsec.

4. Laser à décharge longitudinale selon la revendications 1 et 2, dans lequel on omet ledit thyratron dans le circuit de commande de décharges de pompage et dans lequel on maintient la tension du condensateur de pompage inférieure à la tension d'auto-déclenchement, de telle sorte que la décharge de pompage est obtenue dès que le gaz est ionisé par la décharge de pré-ionisation.

# 0 067 797

FIG. 1a.

FIG. 1b.

FIG. 2

2

GAS MIXTURE
OUT

GAS MIXTURE
$(10\%CO_2, 10\%N_2, 80\%He)$
IN

CONTINUOUS-WAVE SECTION

PULSING SECTION

LASER
RADIATION

HEAT
EXCHANGER

TURBINE

WATER

FIG. 3

0 067 797

3

FIG. 4

A — DETECTED OUTPUT VOLTAGE (V) vs PREIONIZATION DELAY (μsec)

B — DETECTED OUTPUT VOLTAGE (V) vs PREIONIZATION VOLTAGE (KV)

C — $E_{OUT}$ (J) vs $P_{total}$ (TORR), MEASURED AT 3 pps; o 1:1:3, x 1:1:8

D — $E_{OUT}$ (J) vs $E_{IN}$ (J); o 1:1:8, x 1:1:3